Europäisches Patentamt

(19) European Patent Office

Office européen des brevets

(11) Veröffentlichungsnummer: **0 081 059**
**B1**

(12) # EUROPÄISCHE PATENTSCHRIFT

(45) Veröffentlichungstag der Patentschrift:
19.03.86

(51) Int. Cl.⁴: **F 41 F 19/00**

(21) Anmeldenummer: 82109262.4

(22) Anmeldetag: 07.10.82

(54) **Waffenrohrlagerung.**

(30) Priorität: 05.12.81 DE 3148265

(43) Veröffentlichungstag der Anmeldung:
15.06.83 Patentblatt 83/24

(45) Bekanntmachung des Hinweises auf die Patenterteilung:
19.03.86 Patentblatt 86/12

(84) Benannte Vertragsstaaten:
CH DE FR GB IT LI SE

(56) Entgegenhaltungen:
CH - A - 383 084
DE - A - 1 575 472
DE - A - 3 013 988
DE - C - 864 485
GB - A - 994 715
US - A - 1 814 833

(73) Patentinhaber: Rheinmetall GmbH,
Ulmenstrasse 125 Postfach 6609, D-4000 Düsseldorf
(DE)

(72) Erfinder: Heintz, Wolfgang, Paul-Bonatz-Strasse 5,
D-4000 Düsseldorf 13 (DE)
Erfinder: Pehker, Manfred, Wupperstrasse 40,
D-4000 Düsseldorf 1 (DE)
Erfinder: Metz, Josef, Gillbachstrasse 42,
D-4040 Neuss 1 (DE)

(74) Vertreter: Behrens, Ralf Holger, Dipl.-Phys., in Firma
Rheinmetall GmbH Ulmenstrasse 125 Postfach 6609,
D-4000 Düsseldorf 1 (DE)

## Beschreibung

Die Erfindung betrifft eine Rohrwaffe nach dem Oberbegriff des Patentanspruchs 1.

Es ist bekannt, daß rück und vorlaufende Waffenrohre, innerhalb schwenkbarer Wiegenrohre üblicherweise in zwei Gleitlagerbuchsen gelagert werden, wobei die jeweilige Gleitlagerbuchse mündungsseitig Waffenrohrfest und bodenstückseitig wiegenrohrfest angeordnet ist. Als Folge eines dabei einzuhaltenden Gleitlagerspieles, resultierend aus einer zu berücksichtigenden Waffenrohrdehnung bei einer Schußabgabe und einer bei einer schnellen Schuẻ9folge auftretenden Wärmedehnung, wird dabei durch eine unkontrollierte Rohr-Querbewegung die Treffergenauigkeit beeinträchtigt.

Bekannt ist auch eine Lagerung eines Kanonenrohres (DE-A- 30 13 988), bei der anstelle der Gleitlager eine Stützrollenlagerung vorgesehen ist. Dabei liegt jeweils eine verschiebliche Stützrolle eines Lagers, mit einer Vorspannkraft beaufschlagt, auf dem Mantel des Kanonenrohres an wodurch ein Lagerspiel vermieden wird. Damit jedoch die zulässigen Grenzen der Flächenpressung der Stützrollen nicht überschritten werden, ist zwangsläufig ein Aufbau, der über den Platzbedarf beispielsweise bisheriger Gleitbuchsenlagerungen hinausfeht, notwendig. Die Größenverhältnisse der Rollenkörper haben deshalb zur Folge, daß eine Anordnung der Lagerelemente auch außerhalb des Wiegenrohres erforderlich ist.

Es ist zweckmäßig, bei bisher mit schwer auswechselbaren Gleitbuchsenlagerungen ausgestatteten Waffenrohren die Beeinträchtigung der Treffergenauigkeit aufgrund des vorhandenen Lagerspiels zu beseitigen. Dabei kommt es jedoch vor allem darauf an, den Umrüstungsaufwand so gering wie möglich zu halten.

Ein geringer Umrüstungsaufwand kann jedoch bei einem Einbau einer Führung gemäß DE-A 30 13 988 nicht erwartet werden, weil durch den wesentlich größeren Aufbau der Stützrollen sich auch eine äußerst ungünstige Raumausnutzung ergeben würde, wodurch zusätzlich umfangreiche Veränderungen am Wiegenrohr, an beiden Lagerstellen und eine Neukonstruktion benachbarter Baugruppen, beispielsweise einer Blende, erforderlich wären.

Ein weiterer wesentlicher Nachteil der Stützrollenlagerung liegt darin begründet, daß aufgrund einer sehr hohen Anfangsbeschleunigung der Rückbewegung des Waffenrohres während einer Schußabgabe, durch das Beharrungsvermögen der Stützrollen zwischen ihnen und dem Mantel des Waffenrohres ein verschleißverursachender Schlupf entstehen kann, wodurch die Treffergenauigkeit erhöhende Laufruhe des Waffenrohres beeinträchtigt Werden kann.

Aus der US-A-1,814,833 (Fig. 3) ist des weiteren eine Wellenlagerung bekannt, die ein oberhalb senkrecht zur Wellenachse und zwei unterhalb der Wellenachse angeordne, te Gleitlagersegmente umfaßt, von denen das oberhalb der Wellenachse angeordnete Gleitlagersegment radial lageveränderbar und mit einer in radial zur Wellenachse weisenden Kraft vorspannbar ist. Eine derartige Wellenlagerung ist jedoch für die Umrüstung einer innerhalb eines Wiegenrohres angeordneten Waffenrohrlagerung aufgrund des zusätzlichen radial hohen Raumbedarfs insbesondere im Bereich des Vorspannmittels nicht geeignet, Wobei der anfallende Umrüstungsaufwand am Wiegenrohr besonders hoch wäre. Des weiteren benötigt diese Wellenlagerung beispielsweise beim Einsatz in das mündungsseitig angeordnete Waffenrohrlager eine mündungsseitig axial über das Lager hinausragende raumaufwedige und vor Verunreinigungen zu schützende Lauffläche auf dem Waffenrohr.

Des weiteren ist aus der Wellenlagerung gemäß CH-A-383 084 bekannt, daß zwei mit Schrägflächen und mit achsparallel angeordneten vorspannbaren Mitteln versehene, die Welle umhüllende Lagerringe derartig gegen zwei v-förmig nach außen zulaufende Schrägflächen eines auf der Welle befestigten Lagerringes angedrückt werden, daß die mit hoher Drehzahl umlaufende Welle in axialer und und radialer Richtung fixiert ist. Derartige, aufgrund der Ringform der Lagerelemente auch raumaufwendige Wellenlagerungen eignen sich jedoch nicht für eine axial verschiebliche Waffenrohrlagerung innerhalb eines Wiegenrohres, vor allem dann nicht wenn es gilt, das Waffenrohr bei schlagartig auftretenden hohen Radialkräften spielfrei zu lagern.

Der Erfindung liegt unter Vermeidung der genannten Mängel die Aufgabe zugrunde, eine mit teilweise radial lageveränderbaren Führungselementen ausgerüstete Lagerung eines rück- und vorlaufenden Waffenrohres derartig zu gestalten, daß die Waffenrohrlagerung spielfrei und raumsparend innerhalb eines schwenkbaren Wiegenrohres angeordnet werden kann, wobei die äußeren Randbedingungen um das Wiegenrohr, die auch das Waffenrohr einschließen, voll erhalten bleiben und der aufzubringende Änderungsumfang nicht wesentlich über den Lagerbereich hinausgeht sowie verschlissene Lagerteile ohne nennenswerten Montageaufwand leicht ausgewechselt werden können.

Gelöst wird diese Aufgabe durch die im kennzeichnenden Teil des Patentanspruches 1 angegebenen Merkmale. Weitere vorteilhafte Ausgestaltungen und Weiterbildungen der Erfindung gehen aus den Unteransprüchen hervor.

Durch die Erfindung wird es ermöglicht, ein Waffenrohr innerhalb des Wiegenrohres auf drei Gleitlagersegmenten spielfrei zu lagern. Dadurch, daß das obenliegende Gleitlagersegment mit einer in radialer Richtung weisenden Kraft vorspannbar ist, aber auch gleichzeitig in der Lage ist, bei einer Rohrdehnung, beispielsweise bei einer Schuß-abgabe und einer Rohrerwärmung den Waffenrohrduchmesserveränderungen zu folgen wird eine Querbewegung des Waffen, rohres bei einer Schußabgabe im Bereich des Lagers vermieden und dadurch eine Erhöhung der Treffergenauigkeit der aus dem Waffenrohr verschossenen Munition erreicht. Die Anwendung von Gleitlagersegmenten gestattet dabei eine problemlose Lagerung des Waffenrohres im Bereich bisheriger Gleitlagerbuchsen zwischen der Wiegenrohrinnenseite und dem Waffenrohrmantel in besonders vorteilhafter Weise auf engstem Raum. Die Waffenrohrlagerung zeichnet sich dabei besonders durch einen Feringen Materialbedarf und eine günstige Austauschmöglichkeit der Verschleißteile aus.

In vorteilhafter Weise sind bei Wenigstens einem Lager die Gleitlagersegmente auf dem Waffenrohr platzsparend in einer Lagerbuchse angeordnet. Zwischen Wiegenrohrinnenseite und Waffenrohrmantel wird dabei auf engstem Raum eine in Waffenrohrachse gerichtete Vorspannkraft durch Andrehen eines Gewinderinges auf das obenliegende Gleitlagersegment übertragen, so daß eine Abstützung in radialer Richtung der Außenfläche aller drei Gleitlagersegmente an der feststehenden Wiegenrohrinnenseite auch während des Rück- und Vorlaufes des Waffenrohres erfolgen kann. Die in Waffenrohrachse gerichtete Vorspannkraft wird dabei durch eine abgestimmte Formgebung der Seitenflächen des oberen Gleitlagersegmentes und der dazu gehörigen beidseitig unterlegten Spannelemente auf eine mehrfach größere radial gerichtete Vorspannkraft übersetzt. Erheblich verschleißdämpfend und reibungsverhindernd wirkt sich bei der Aufnahme der radial gerichteten Vorspannkraft eine Beschichtung der Wiegenrohrinnenseite als Gegengleitfläche der Gleitlagersegmente aus.

Die Vorspannung des Lagers ist dabei so bemessen, daß auch extreme von dem Waffenrohr ausgehende radial gerichtete Belastungen dauernd aufnehmbar sind, die jedoch keine Querbeiwegungen des Waffenrohres zuläßt. Die Erfindung verdeutlicht darüber hinaus, daß auf engstem Raum ein vorspannbares Gleitlager auf einem Waffenrohr angeordnet werden kann, wobei es ohne besondere Vorkehrungen möglich ist, diese Baugruppe leicht auszuwechseln.

Besonders vorteilhaft gegenüber der Führung gemäß DE-A-30 13 988 zeichnet sich dieses Lager vor allem durch eine äußerst raumsparende dabei jedoch robuste Bauweise aus, und dadurch, daß das Waffenrohr im Bereich des Lagers ohne Querbewegungenbesonders ruhig gleitet, aber auch dadurch, daß auf dem Waffenrohr mündungsseitig keine Lauffläche notwendig ist wodurch Weitere vor Verunreinigungen zu schützende Bereiche nicht benötigt werden. Bei der Erfindung können deshalb ungünstige Durchbrüche am Wiegenrohr entfallen, so daß auch Weitere Änderungen benachbarter Baugruppen entbehrlich sind.

Die Erfindung wird anhand eines, in den Zeichnungen dargestellten Ausführungsbeispieles des näheren erläutert.

Es zeigt:

Fig. 1 einen Teillängsschnitt eines durch Gleitlagersegmente innerhalb eines Wiegenrohres gelagerten Waffenrohres,

Fig. 2 eine Draufsicht des mündungsseitig angeordneten Lagers, gesehen in Richtung A in Fig. 1 jedoch ohne Berücksichtigung des Wiegenrohres und der Blende,

Fig. 3 eine Schnittdarstellung entlang der Fläche 3 - 3 in Fig. 1 des mündungsseitig angeordneten Lagers,

Fig. 4 eine Schnittdarstellunf entlang der Fläche 4 - 4 in Fig. 1 des bodenstückseitig angeordneten Lagers.

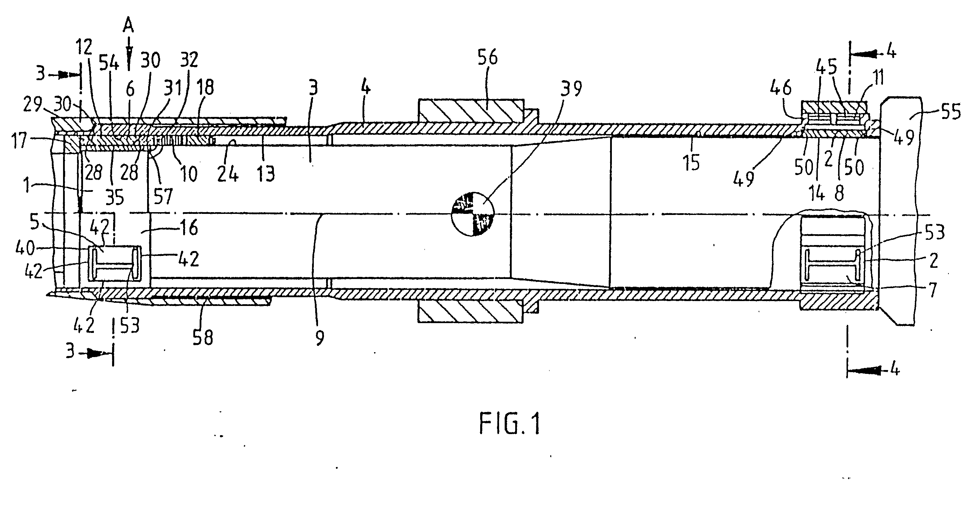

In Figur 1 wird ein Waffenrohr 3 in einem von einer Blende 58 umgebenen Wiegenrohr 4 mündungsseitig in einem Gleitlager 1 gemäß Erfindung und zum Bodenstück 55 hin gerichtet in einem im wesentlichen bekannten Gleitlager 2 gelagert. Das Waffenrohr 3 ist dabei in der Lage, durch die Anordnung des Wiegenrohres 4 in einer Wiegenwalze 56 um eine Schildzapfenachse 39 geschwenkt zu werden.

Beide Gleitlager 1,2 sind mit jeweils drei auf dem Umfang verteilten Gleitlagersegmenten 5,6,7,8 ausgerüstet. Die Gleitlagersegmente 5,6 des Gleitlagers 1 sind dabei auf dem Waffenrohr 3 befestigt und gleiten bei Schußabgabe während der Rück- und Vorbewegung an der Wiegenrohrinnenseite 13 entlang, während die Gleitlagersegmente 7,8 des Gleitlagers 2 von dem feststehenden Wiegenrohr 4 gehalten werden und der Waffenrohrmantel 15 von ihnen gleitend geführt wird. Zur Erzielung einer spielfreien Waffenrohrlagerung, sind bei jedem Lager 1,2 die beiden oben liegenden Gleitlagersegmente 6,8 radial beweglich angeordnet und in dieser Richtung mit einer vorwählbaren Kraft vorspannbar.

In dem Gleitlager 1 wird das Waffenrohr 3 durch die mit einer Vorspannkraft an der Wiegenrohrinnenseite 13 anliegenden Außenseite 12 des Gleitlagersegmentes 6, über die unterhalb der Waffenrohrachse 9 angeordneten Gleitlagersegmente 5 an die Wiegenrohrinnenseite 13 gedrückt. Die in radialer Richtung weisende Vorspannkraft wird auf engstem Raum durch eine Umlenkung einer axial gerichteten von Spannmittel 10 erzeugten Vorspannkraft erreicht. Die Umlenkung der Vorspannkraft der Spannmittel 10, erfolgt durch den in axiale Richtung gehenden Hub während des Andrehens des Gewinderinges 17 gegen ein Stützelement 29 unter Abstützung des Gleitlagerelementes 6 einerseits mit den beidseitig angeordneten Schrägflächen 28 auf den Schrägflächen 30 der Stützelemente 29, 31 und anderseits auf der Wiegenrohrinnenseite 12 wodurch die Stirnfläche 32 des Stützelementes 31 gegen die Spannmittel 10 gedrückt wird. Durch eine günstige Winkelwahl der Schrägflächen 28, 30 ist eine radiale Kraftkomponente des Gleitlagersegmentes 6 in mehrfacher Höhe der axial gerichteten Vorspannkraft der Spannmittel 10 erreichbar.

Zwischen dem Waffenrohrmantel 24 und der Wiegenrohrinnenseite 13 befindet sich zur Abstützung der Spannmittel 10 eine an der Lagerbuchse 16 befestigte Spanneinheit 18. Beidseitig der Innenseite 35 des Gleitlagersegmentes 6 wird in radialer Richtung über die Stützelemente 29,31 die Vorspannkraft zur Abstützung auf die in den Aussparungen 40 befindlichen, durch Seitenflächen 42 arretierten Gleitlagersegmente 5 übertragen. Damit jeweils eine gleichfroße Aufteilung der Abstützkraft auf beide Lagersegmente erfolgen kann, ist die Lagerbuchse 16 durch die Feder 57 gegen Verdrehung gesichert.

Im Gleitlager 2 ist das obenliegende Gleitlagersegment 8 in an sich bekannter Weise unmittelbar durch Spannmittel 11 beaufschlagt. Als Spannmittel 11 dienen dabei in einem Gehäuse 46 beispielsweise zwei in Waffenachsrichtung 9 hintereinander angeordnete Federsäulen 45. Damit das Gleitlagersegment 8 einen in axialer Richtung festen Sitz im Wiegenrohr 4 erhält, sind die Längsseiten 49 durch die Ausnehmung 50 positioniert. Über die ebenfalls im Wiegenrohr 4 anfeordneten beiden unteren Lagersegmente 7 wird das Waffenrohr 3 auf seinem Waffenrohrmantel 15 abgestützt und durch die Vorspannunf des Gleitlagersegmentes 8 spielfrei geführt.

Zur Erzielung einer hohen Standzeit und eines reibungsarmen Ablaufes aller an der axialen Waffenrohrbewegung beteiligten Gleitflächen sind bei den Gleitlagersegmenten 5,6 auf der Außenseite und bei den Gleitlagersegmenten 7,8 auf der Innenseite Schmiernuten 53 vorgesehen wobei die Wiegenrohrinnenseite 13 im Hubbereich des Gleitlagers 1 als Führungsfläche 54 mit einer reibungs- und verschleißreduzierenden aus einer Metall-Kunststoffkombination bestehenden Beschichtung versehen ist.

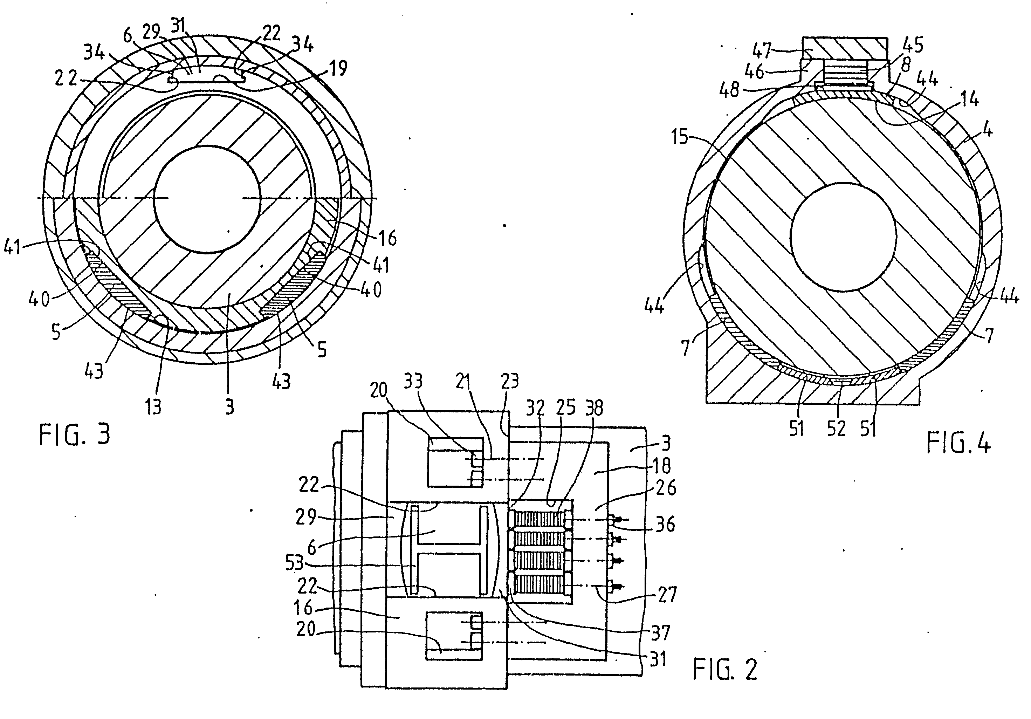

Fig. 2 zeigt in einer vergrößerten Draufsicht die Anordnung des oberen Gleitlagersegmentes 5 des Gleitlagers 1. Innerhalb der genuteten Seitenflächen 22, der auf dem Waffenrohr 3 befindlichen Lagerbuchse 16, sind axial verschiebliche Stützelemente 29,31 und das radial verschiebliche Gleitlagersegment 6 angeordnet. Beidseitig vom Lagersegment 6 sind an der Lagerbuchse 16 symmetrisch Fenster 20 ausgearbeitet,die es gestatten mit Befestigungsschrauben 33 innerhalb von Bohrungen 21 die Spanneinheit 18 an die Stirnseite 23 anzuschrauben. Innerhalb der Aussparung 25 werden von dem Steg 26 der Spanneinheit 18 beispielsweise als Spannmittel 10 vier nebeneinander angeordnete Federelementreihen gegen die Stirnfläche 32 des Stützelementes 31 abgestützt, wobei die Federelemente 38 von beispielsweise vier über die Bohrungen 27 des Steges 26 hinausreichende Bolzen 37, durch Muttern 36 vorspannbar sind.

Figur 3 verdeutlicht die Anordnung der Gleitlagersegmente 5,6 des Gleitlagers 1 auf der Lagerbuchse 16. Sichtbar Wird dabei das Profil der genuteten Seitenflächen 22 der Lagerbuchse 16 zur Aufnahme der Seitenflächen 34 der Stützelemente 29, 31 und des Gleitlagersegmentes 6 auf der 8egmentfläche 19. Im unteren Bereich der Lagerbuchse 16 liegen auf der Grundfläche der Aussparungen 40 die beiden Gleitlagersegmente 5 mit ihren Innenseiten 41 fest arretiert an, während ihre Außenseiten 43 das Waffenrohr 3 an der Wiegenrohrinnenseite 13 abstützen.

Aus Figur 4 geht im einzelnen die Positionierung der Gleitlagersegmente 7,8 in den Ausnehmungen 44 des Wiegenrohres 4 und die seitliche Lage einer federelementsäule 45 innerhalb eines von einer Platte 47 abgedeckten und vom Wiegenrohr 4 gebildeten Gehäuses 46 hervor. Die Federelemente werden dabei von einem auf der Außenseite des Lagerelementes 8 befestigten Bolzens 48 zentriert und drücken mit ihrer Vorspannkraft das Gleitlagersegment 8 mit der Innenseite 14 auf den Waffenrohrmantel 15. Im unteren Bereich wird der Waffenrohrmantel 15 gegen die Innenseiten der durch das Klemmstück 52 und die Klemmsegmente 51 in Umfangsrichtung fixierten Gleitlagerelemente 7 abgestützt und geführt.

In der Beschreibung wird vorteilhaft verdeutlicht, daß die Waffenrohrlagerung gemäß Erfindung im Gegensatz zu Gleitbuchsenlagerungen herkömmlicher Art, sich durch Spielfreiheit, leichte Auswechselbarkeit und in den Lagern durch erhebliche Materialeinsparungen auszeichnet und gegenüber teilweise lageveränderbaren wiegenrohrfesten Führungselementen eine robuste, platzsparende, unempfindliche, bei einer Umrüstung wenig Baugruppen beeinträchtigende Waffenrohrlagerung darstellt, die während der Schuß-abgabe dem Waffenrohr eine stabile Führung verleiht und eine hohe Treffergenauigkeit herbeiführt.

**Bezugszeichenliste**

1. Gleitlager
2. Gleitlager
3. Waffenrohr
4. Wiegenrohr
5. Gleitlagersegment
6. Gleitlagersegment
7. Gleitlagersegment
8. Oleitlagersegment
9. Waffenrohrachse
10. Spannmittel
11. Spannmittel
12. Außenseite
13. Wiegenrohrinnenseite
14. Innenseite

15. Waffenrohrmantel
16. Lagerbuchse
17. Gewindering
18. Spanneinheit
19. Segmentfläche
20. Fenster
21. Bohrung
22. Seitenfläche
23. Stirnseite
24. Waffenrohrmantel
25. Aussparung
26. Steg
27. Bohrung
28. Schrägfläche
29. Stützelement
30. Schrägfläche
31. Stützelement
32. Stirnfläche
33. Befestigungsschraube
34. Seitenfläche
35. Innenseite
36. Mutter
37. Bolzen
38. Federelemente
39. Schildzapfenachse
40. Aussparung
41. Innenseite
42. Seitenfläche
43. Außenseite
44. Ausnehmung
45. Federelementsäule
46. Gehäuse
47. Platte
48. Bolzen
49. Längsseite
50. Ausnehmung
51. Klemmsegment
52. Klemmstück
53. Schmiernute
54. Führungsfläche
55. Bodenstück
56. Wiegenwalze
57. Feder
58. Blende

**Patentansprüche**

1. Waffenrohrlagerung eines innerhalb eines Führungsrohres längsbeweglichen Waffenrohres (3) mit jeweils einem mündungs- und bodenseitig angeordneten Lager, Wobei jedes Lager ein oberhalb senkrecht zur Waffenrohrachse (9) und zwei unterhalb der Waffenrohrachse (9) angeordnete Führungselemente umfaßt, von denen jeweils das senkrecht zur Waffenrohrachse (9) oben liegende Führungselement radial lageveränderbar und mit einer in radialer Richtung weisenden Kraft vorspannbar ist dadurch gekennzeichnet, daß als Führungselemente ausgebildete Gleitlagersegmente (5, 6) wenigstens bei einem (1) der als Gleitlager (1, 2) ausgebildeten Lager innerhalb eines Wiegenrohres (4) auf dem Waffenrohr (3) angeordnet sind, wobei die in radialer Richtung weisende Vorspannkraft nach außen gerichtet ist und die Außenseite (12) des oben liegenden Gleitlagersegmentes (6) unter Anpressung an der Innenseite (13) des Wiegenrohres (4) anliegt sowie die bei der Anpressung des Gleitlagersegmentes (6) erzeugte Kraft über die zwei unterhalb der Waffenrohrachse (9) angeordneten Gleitlagersegmente (5) auf der gleichen Innenseite (13) des Wiegenrohres (4) abstützbar ist.

2. Rohrwaffe nach Anspruch 1 dadurch gekennzeichnet, daß das Gleitlager (1) mit einer die Gleitlagersegmente (5,6) und weitere zur Abstützung des oberen Gleitlagersegmentes (6) vorgesehene Stützelemente (29,31) aufnehmenden Lagerbuchse (16), einem zur Befestigung der Lagerbuchsen (16) auf dem Waffenrohr (3) dienenden Gewindering (17) und zur Erzeugung der radialen Vorspannung mit einer Spannmittel (1) aufnehmenden Spanneinheit (18) ausgerüstet ist.

3. Rohrwaffe nach Anspruch 1 und 2 dadurch gekennzeichnet, daß die Lagerbuchse (16) zur Aufnahme des oberen Gleitlagersegmentes (6) eine in Waffenrohrachsrichtung über die ganze Breite der Lagerbuchse (16) nach außenhin geöffnete Segmentfläche (19) mit genuteten Seitenflächen (22) und zur Befestigung der Spanneinheit (18) Fenster (20) enthält, von deren Öffnungen aus mit Befestigungsschrauben (33) über Bohrungen (21) die Spanneinheit (18) an der Stirnseite (23) anschraubbar ist.

4. Rohrwaffe nach einem der Ansprüche 1 bis 3, dadurch gekennzeichnet, daß die Spanneinheit (18) aus einem innen vom Waffenrohrmantel (24) und außen von der Wiegenrohrinnenseite (13) begrenzten Segment besteht, bei dem mittig auf der Seite der Lagerbuchse (16) eine Aussparung (25) und auf dem verbleibenden Steg (26) Bohrungen (27) für die Anordnung des Spannmittels (10) vorgesehen sind.

5. Rohrwaffe nach einem der Ansprüche 1 bis 4, dadurch gekennzeichnet, daß das obere Gleitlagersegment (6) in der Waffenrohrachsrichtung (9) abgesetzte Seitenflächen (34) aufweist, die von den genuteten Seitenflächen (22) der Lagerbuchse (16) aufnehmbar sind, und daß quer zur Waffenrohrachsrichtung (9) beidseitig symmetrische, die Länge der Außenseite (12) gegenüber der Länge der Innenseite (35) vergrößernde v-förmig verlaufende Schrägflächen (28) angeordnet sind, womit es auf jeweils zugeordneten Schrägflächen (30) zweier keilförmig gestalteter Stützelemente (29, 31) auflegbar ist.

6. Rohrwaffe nach einem der Ansprüche 1 bis 5, dadurch gekennzeichnet, daß ein Stützelement (31) eine zur Spanneinheit (18) hinweisende senkrechte Fläche (32) aufweist, an der die in Bohrungen (27) des Steges (26) befestigten Spannmittel (10) fixierend abstützbar sind.

7. Rohrwaffe nach einem der Ansprüche 1 bis 6 dadurch gekennzeichnet, daß die Spannmittel (10) aus mechanischen Federelementen (38) gebildet werden, wobei durch einen von einer Mutter (36) gegen die Innenseite des Steges (26) anziehbaren Bolzen (37) die Federelemente (38) vorspannbar sind.

8. Rohrwaffe nach einem der Ansprüche 1 bis 7, dadurch gekennzeichnet, daß in der unteren Hälfte der Lagerbuchse (16) zur Aufnahme und Befestigung der dort vorgesehenen Gleitlagersegmente (5), zwei nach außen geöffnete Aussparungen (40) beidseitig in gleichen Abständen von der Segmentfläche (19) angeordnet sind.

9. Rohrwaffe nach einem der Ansprüche 1 bis 8, dadurch gekennzeichnet, daß jedes untere Gleitlagersegment (5) mit einer rechteckigen, ebenen, auf der Grundfläche der Aussparung (40) aufliegenden, Befestigungsbohrungen auftveisenden Innenseite (41) und mit senkrecht zu ihr stehenden Seitenflächen (42), sowie einer der Innenwölbung des Wiegenrohres (4) angepaßten Außenseite (43) versehen ist.

10. Rohrwaffe nach einem der Ansprüche 1 bis 9, dadurch gekennzeichnet, daß die Anpressung der Außenseite (12) des oberen Gleitlagersegmentes (6) an die Wiegenrohrinnenseite (13) durch Andrehung des Gewinderinges (17) gegen die Stützelemente (29, 31), das obere Gleitlagersegment (6) und die vorgespannten Spannmittel (10) erzeugbar ist, wobei durch eine radiale Abstützung der Stützelemente (29, 31) auf der Lagerbuchse (16) unter gleichzeitiger Kraftübertragung auf die Schrägflächen (28) des oberen Gleitlagersegmentes (6) die parallel zur Waffenrohrachse (9) gerichtete Vorspannkraft der Spannmittel (10) in eine radial die Wiegenrohrinnenseite (13) beaufschlagende und die Vorspannkraft überschreitende Kraftkomponente umlenkbar ist.

11. Rohrwaffe nach einem der Ansprüche 1 bis 10 dadurch gekennzeichnet, daß auf den Außenseiten der Gleitlagersegmente (5, 6) in Waffenrohrumfangsrichtung verlaufende, miteinander verbundene Schmiernuten (53) vorgesehen sind.

12. Rohrwaffe nach einem der Ansprüche 1 bis 11, dadurch gekennzeichnet, daß die Wiegenrohrinnenseite (13) im Bereich der Gleitbewegung des Gleitlagers (1) als Führungsfläche (54) mit einer reibungs- und verschleißreduzierenden aus einer Metall-Kunststoffkombination bestehenden Beschichtung versehen ist.

13. Rohrwaffe nach Anspruch 12, dadurch gekennzeichnet, daß die Beschichtung der Führungsfläche (54) aus einer Kombination aus Hartchrom und Polytetrafluoräthylen besteht.

## Claims

1. Mounting for a barrel weapon (3) which is movable longitudinally within a guide tube with bearings at the mouth and the base, each bearing comprising one guide element above and perpendicular to the axis (9) of the barrel, the guide element situated above and perpendicular to the axis (9) of the barrel in each case being adjustable in position in a radial direction and preloadable with a force acting radially characterised by the fact that plain bearing segments (5,6) forming guide elements (1,2) are situated inside a cradle (4) on the barrel (3) of the weapon, while the preloading force acting radially is directed outwardly, the outside (12) of the plain bearing segment (6) located at the top resting by contact pressure against the inside (13) of the cradle (4), the force generated through the contact pressure of the plain bearing segment (6) being supported on the same internal side (13) of the cradle (4), through two plain bearing segments (5) situated underneath the axis (9) of the barrel.

2. Barrel weapon in accordance with Claim 1, characterised by the fact that the plain bearing (1) is provided with a bearing bush (16) which accommodates the plain bearing segments (5, 6) and further support elements (29, 31) provided for the support of the upper plain bearing segment (6) with a threaded ring (17) serving to secure the bearing bush (16) on the barrel (3) of the weapon, a clamp unit (18) accommodating a clamping means (1) for the production of the radial preloading.

3. Barrel weapon in accordance with Claim 1 and 2, characterised by the fact that the bearing bush (16) receiving the upper plain bearing segment (6) contains a segment surface (19) which is open outwardly in the direction of the barrel axis and over the entire width of the bearing bush (16), the surface having grooved lateral surfaces (22) and windows (20) for securing the clamp unit (18) onto the end (23) by means of securing screws (33) and through borings (21).

4. Barrel weapon in accordance with any one of Claims 1 to 3, characterised by the fact that the clamp unit (18) comprises a segment which is delimited internally by the casing (24) of the barrel and externally by the inside (13) of the barrel and in which a recess (25) is provided centrally on the side of the bearing bush (16) and borings (27) are provided on the remaining crosspiece (26) for positioning the clamp means (10).

5. Barrel weapon in accordance with any one of Claims 1 to 4, characterised by the fact that the upper plain bearing segment (6) has lateral surfaces (34) which are stepped in the direction of the axis (9) of the barrel and which can be accommodated by the grooved lateral surfaces (22) of the bearing bush (16), transversally to the direction (9) of the axis of the barrel, oblique surfaces (28) are provided which have a V-shape and which increase the length of the exterior (12) in relation to that of the interior (35) whereby the segment can be placed on the respective associated oblique surfaces (30) of two wedgeshaped supporting elements (29, 31).

6. Barrel weapon in accordance with any one of Claims 1 to 5, characterised by the fact that a supporting element (31) has a perpendicular surface (32) which faces the clamp unit (18) and on which the clamp means (10) which is secured in borings (27) of the crosspiece (26) can be supported.

7. Barrel weapon in accordance with any one of Claims 1 to 6, characterised by the fact that the clamp means (10) comprises mechanical spring elements (38), the spring elements (38) being preloadable by a bolt (37) which can be tightened against the inside of the crosspiece (26) by a nut (36).

8. Barrel weapon in accordance with any one of Claims 1 to 7, characterised by the fact that in the lower half of the bearing bush (16) to accommodate and secure the plain bearing segments (5) located therein, two recesses (40) open towards the outside are provided on the two sides of the segment surface (19) and at equal distances therefrom.

9. Barrel weapon in accordance with any one of Claims 1 to 8, characterised by the fact that each lower plain bearing segment (5) is provided with a rectangular, flat interior side (41) bearing on the base surface of the recess (40) and having securing borings with lateral surfaces perpendicular to the said interior side and with an external surface (43) adapted to the internal curvature of the cradle (4).

10. Barrel weapon in accordance with any one of Claims 1 to 9, characterised by the fact that the contact pressure of the external side (12) of the upper plain bearing segment (6) against the inside (13) of the cradle (4) is obtained by turning the threaded ring (17) towards the supporting elements (29,31) the upper plain bearing segment (6) and the preloaded clamp means (10) in which process, by the radial support of the elements (29, 31) on the bearing bush (16) accompanied by transmission of force to the oblique surfaces (28) of the upper plain bearing segment (6), the preloading force of the clamp means (10), which is directed parallel to the axis (9) of the barrel, can be deflected to provide a force component which acts radially on the inside (13) of the cradle (4) and which exceeds the said preloading force.

11. Barrel weapon in accordance with any one of Claims 1 to 10, characterised by the fact that interconnected lubricating grooves (53), extending in a peripheral direction, are provided on the outsides of the plain bearing segments (5,6).

12. Barrel weapon in accordance with any one of Claims 1 to 11 characterised by the fact that the inside (13) of the cradle is provided in the zone of the sliding movement of the plain bearing (1), with a guide surface (54) comprising a coating of a metal and plastic in combination to reduce friction and wear.

13. Barrel weapon in accordance with Claim 12, characterised by the fact that the coating on the guide surface (54) comprises a combination of hard chromium and polytetrafluorethylene.

**Revendications**

1. Support pour tube de canon (3) pour tube mobile longitudinalement à l'intérieur d'un tube de guidage, comprenant un dispositif de support disposé respectivement du côté de l'embouchure et du côté du fond, chaque dispositif de support comportant un élément de guidage disposé perpendiculairement au-dessus de l'axe (9) du tube de l'arme et deux éléments de guidage disposés au-dessous de l'axe (9) du tube de l'arme, celui des éléments de guidage respectifs qui est situé en hsut perpendiculairement à l'axe (9) du tube de l'arme pouvant être déplacé radialement et être soumis à une précontrainte selon une force orientée radialement, caractérisé en ce que des segments de paliers à glissement (5, 6) constitués sous forme d'éléments de guidage sont prévus sur le tube (3) de l'arme à l'intérieur d'un berceau tubulaire (4) pour au moins un des dispositifs de support constitués sous forme de paliers à glissement (1, 2), la force de précontrainte orientée en direction radiale étant dirigée vers l'extérieur, et le côté extérieur (12)du segment de palier à glissement (6) situé en haut s'appliquant par pression contre le côté interne (13) du berceau tubulaire (4) de même que la force créée par la pression exercée par le segment de palier à glissement (6) pouvant être supportée sur le même côté interne (13)du berceau tubulaire (4) par l'intermédiaire des deux segments de palier à glissement (5) disposés au-dessous de l'axe (9) du tube de l'arme.

2. Arme à tube selon la revendication 1, caractérisé en ce que le palier à glissement (1) est équipé d'un coussinet (16) logeant les segments de palier à glissement (5, 6) et en outre d'éléments d'appui (20, 31) prévus pour supporter le segment de palier à glissement supérieur (6), d'une bague filetée (17) servant à la fixation des coussinets (16) sur le canon (3) de l'arme et d'un ensemble de serrage (18) comportant des moyens de serrage (10) pour obtenir la precontrainte radiale.

3. Arme à tube selon la revendication 1 ou 2, caractérisée en ce que le coussinet (16) présente en vue de la réception du segment de palier à glissement supérieur (6) une surface (19) à faces latérales rainurées (22) et des fenêtres (20) pour la fixation de l'ensemble de serrage (18) sur la totalité de la largeur du coussinet (16) et ouvertes vers l'extérieur en direction de l'axe du tube de l'arme, l'ensemble de serrage (18) pouvant être vissé sur le côté frontal (23), à partir des ouvertures des fenêtres, par des vis de fixation (33) passant par des alésages (21).

4. Arme à tube seion l'une des revendicstions 1 à 3, caractérisée en ce que l'ensemble de serrage (18) est constitué par un segment limité vers l'intérieur par l'enveloppe (24) du canon de l'arme et vers l'extérieur par le côté interne (13) du berceau tubulaire, un évidement (25) étant prévu au milieu sur le côté du coussinet (16) et des alésages (27) étant prévus dans la partie de dos restante (26) pour la mise en place de l'ensemble de serrage.

5. Arme à tube selon l'une des revendications 1 à 4, caractérisée en ce que le segment de palier de glissement supérieur (6) présente en direction axiale (9) du canon de l'arme des surfaces latérales étagées (34) qui peuvent s'emboîter dans les surfaces latérales rainurées (22) du coussinet (16) et en ce que transversalement à la direction axiale (9) du canon de l'arme et symétriquement sur les deux côtés sont sménagées des surfaces obliques (28) formant un V et augmentant la longueur du côté externe (12) par rapport à la longueur du côté interne (35), deux éléments d'appui (29, 31) en forme de coins pouvant s'appliquer sur les surfaces obliques associées respectives (30).

6. Arme à tube selon l'une des revendications 1 à 5, caractérisée en ce qu'un élément d'appui (31) présente une surface (32) perpendiculaire et tournée vers l'ensemble de serrage (18), contre laquelle les moyens de serrage (10) fixés dans des alésages (27) de la branche (26) peuvent s'appuyer de façon fixe.

7. Arme à tube selon l'une des revendications 1 à 6, caractérisée en ce que les moyens de serrage (10) sont constitués par des éléments mécaniques à ressort (38), les éléments à ressort (38) pouvant être soumis à une précontrainte par un boulon (37) qui peut être tiré contre le côté interne de la partie de dos (26) par un écrou (36).

8. Arme à tube selon l'une des revendications 1 à 7, caractérisée en ce que sont constitués dans la moitié inférieure du coussinet (16), en vue de recevoir et de fixer les segments de paliers à glissement (5) prevus en cet endroit, deux évidements (40) ouverts vers l'extérieur sur les deux côtés et à la même distance de la surface (19) destinéeau segment supérieur.

9. Arme à tube selon l'une des revendications 1 à 8, caractérisée en ce que chaque segment de palier à glissement inférieur (5) présente un côté interne (41) rectangulaire, plan, reposant contre la surface de base de l'évidement (40) et comportant des alésages de fixation et des surfaces latérales (42) perpendiculaires à celle-ci, ainsi qu'un côté extérieur (43) adapté à la courbure interne du berceau tubulaire (4).

10. Arme à tube selon l'une des revendications 1 à 9, caractérisée en ce que la pression exercée par le côté externe (12)du segment de palier à glissement supérieur (6) contre le côté interne (13) du berceau tubulaire peut être établie en vissant la bague filetée (17) contre les éléments d'appui (29, 31), le segment de palier à glissement supérieur (6) et les moyens de serrage soumis à une précontrainte (10), ce grâce à quoi la force de précontrainte psrallàle à l'axe (9) du tube de l'arme peut être renvoyée en une composante de force radiale agissant contre le côté interne (13) du berceau tubulaire et dépassant la force de précontrainte par un appui radial des éléments d'appui (29, 31) sur le coussinet (16) et par une transmission simultanée de la force aux surfaces obliques (28) du segment de palier à glissement supérieur (6).

11. Arme à tube selon l'une des revendications 1 à 10, caractérisée en ce que des rainures de graissage (53) reliées les unes aux autres et disposées en direction périphérique du tube de l'arme sont prévues sur le côté extérieur des segments de paliers à glissement (5, 6).

12. Arme à tube selon l'une des revendications 1 à 11, caractérisée en ce que le côté interne (13) du berceau tubulaire est muni dans la région du mouvement glissant du palier à glissement (1) d'une couche constituée par une combinaison d'un métal et d'une matière synthétique réduisant le frottement et l'usure et constituant une surface de guidage (54).

13. Arme à tube selon l'une des revendications 1 à 12, caractérisée en ce que la couche recouvrant la surface de guidage (54) est constituée par une combinaison de chrome dur et de polytétrafluoréthylene.

FIG.1

FIG. 3

FIG. 4

FIG. 2

0 081 059